(19) Europäisches Patentamt
European Patent Office
Office européen des brevets

(11) EP 0 984 694 B1

(12) **EUROPÄISCHE PATENTSCHRIFT**

(45) Veröffentlichungstag und Bekanntmachung des Hinweises auf die Patenterteilung:
**11.12.2002 Patentblatt 2002/50**

(21) Anmeldenummer: **98928273.6**

(22) Anmeldetag: **15.05.1998**

(51) Int Cl.[7]: **A01N 47/24**, A01N 37/52
// (A01N47/24, 37:52),
(A01N37/52, 37:50)

(86) Internationale Anmeldenummer:
**PCT/EP98/02875**

(87) Internationale Veröffentlichungsnummer:
**WO 98/053689 (03.12.1998 Gazette 1998/48)**

(54) **FUNGIZIDE MISCHUNGEN**

FUNGICIDAL MIXTURES

MELANGES FONGICIDES

(84) Benannte Vertragsstaaten:
**AT BE CH DE DK ES FI FR GB GR IE IT LI NL PT SE**
Benannte Erstreckungsstaaten:
**SI**

(30) Priorität: **28.05.1997 DE 19722223**

(43) Veröffentlichungstag der Anmeldung:
**15.03.2000 Patentblatt 2000/11**

(73) Patentinhaber: **BASF AKTIENGESELLSCHAFT
67056 Ludwigshafen (DE)**

(72) Erfinder:
- **SCHELBERGER, Klaus
D-67161 Gönnheim (DE)**
- **SCHERER, Maria
D-76829 Landau (DE)**
- **SAUR, Reinhold
D-67459 Böhl-Iggelheim (DE)**
- **SAUTER, Hubert
D-68167 Mannheim (DE)**
- **MÜLLER, Bernd
D-67227 Frankenthal (DE)**
- **BIRNER, Erich
D-67317 Altleiningen (DE)**
- **LEYENDECKER, Joachim
D-68526 Ladenburg (DE)**
- **AMMERMANN, Eberhard
D-64646 Heppenheim (DE)**
- **LORENZ, Gisela
D-67434 Neustadt (DE)**
- **STRATHMANN, Siegfried
D-67117 Limburgerhof (DE)**

(56) Entgegenhaltungen:
**EP-A- 0 805 148**
**EP-A- 0 919 126**
**WO-A-96/01256**
**WO-A-97/46097**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 984 694 B1

## Beschreibung

Die vorliegende Erfindung betrifft fungizide Mischungen, welche mindestens eine Verbindung, ausgewählt aus

a) Carbamaten der Formel I,

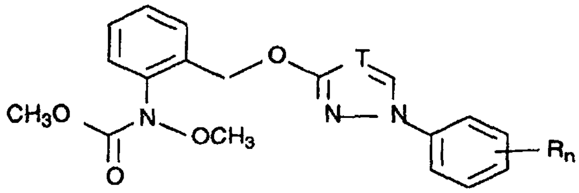

(I)

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht,
und

b) mindestens einen Wirkstoff der Formel IV,

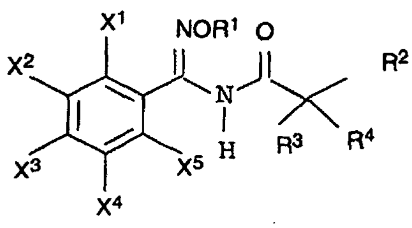

(IV)

wobei die Substituenten $X^1$ bis $X^5$ und $R^1$ bis $R^4$ folgende Bedeutung haben:

$X^1$ bis $X^5$ unabhängig voneinander Wasserstoff, Halogen, $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio, $C_1$-$C_4$-Thioalkoxy, $C_1$-$C_4$-Sulfonylalkyl, Nitro, Amino, N-$C_1$-$C_4$-Carboxylamino, N-$C_1$-$C_4$-Alkylamino;

$R^1$ $C_1$-$C_4$-Alkyl, $C_2$-$C_4$-Alkenyl, $C_2$-$C_4$-Alkinyl, $C_1$-$C_4$-Alkyl-$C_3$-$C_7$-Cycloalkyl, wobei diese Reste Substituenten ausgewählt aus Halogen, Cyano, und $C_1$-$C_4$-Alkoxy tragen können

$R^2$ einen Phenylrest oder einen 5- oder 6-gliedrigen gesättigten oder ungesättigten Heterocyclylrest mit mindestens einem Heteroatom ausgewählt aus der Gruppe N, O und S, wobei die cyclischen Reste einen bis drei Substituenten ausgewählt aus der Gruppe aus Halogen, $C_1$-$C_4$-Alkyl, $C_1$-$C_4$-Alkoxy, $C_1$-$C_4$-Halogenalkyl, $C_1$-$C_4$-Halogenalkoxy, $C_1$-$C_4$-Alkoxy-$C_2$-$C_4$-Alkenyl, $C_1$-$C_4$-Alkoxy-$C_2$-$C_4$-Alkinyl aufweisen können,

$R^3$ und $R^4$ unabhängig voneinander Wasserstoff, $C_1$-$C_4$-Alkyl, $C_1$-$C_4$-Alkoxy, $C_1$-$C_4$-Alkylthio, N-$C_1$-$C_4$-Alkylamino, $C_1$-$C_4$-Halogenalkyl oder $C_1$-$C_4$-Halogenalkoxy

in einer synergistisch wirksamen Menge enthalten.

Außerdem betrifft die Erfindung Verfahren zur Bekämpfung von Schadpilzen mit Mischungen der Verbindungen I und IV und die Verwendung der Verbindungen I und IV zur Herstellung derartiger Mischungen.

Die Verbindungen der Formel I, ihre Herstellung und ihre Wirkung gegen Schadpilze sind aus der Literatur bekannt (WO-A 96/01,256 und 96/01,258).

Die Verbindungen der Formel IV sowie Verfahren zu deren Herstellung sind in der WO-A 96/19442 beschrieben.

Im Hinblick auf eine Senkung der Aufwandmengen und eine Verbesserung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilze zeigen (synergistische Mischungen).

Demgemäß wurden die eingangs definierten Mischungen gefunden.

Die Formel I repräsentiert insbesondere Carbamate, in denen die Kombination der Substituenten einer Zeile der folgenden Tabelle entspricht:

Tabelle 1:

| Nr. | T | $R_n$ |
|---|---|---|
| I.1 | N | 2-F |
| I.2 | N | 3-F |
| I.3 | N | 4-F |
| I.4 | N | 2-Cl |
| I.5 | N | 3-Cl |
| I.6 | N | 4-Cl |
| I.7 | N | 2-Br |
| I.8 | N | 3-Br |
| I.9 | N | 4-Br |
| I.10 | N | 2-$CH_3$ |
| I.11 | N | 3-$CH_3$ |
| I.12 | N | 4-$CH_3$ |
| I.13 | N | 2-$CH_2CH_3$ |
| I.14 | N | 3-$CH_2CH_3$ |
| I.15 | N | 4-$CH_2CH_3$ |
| I.16 | N | 2-$CH(CH_3)_2$ |
| I.17 | N | 3-$CH(CH_3)_2$ |
| I.18 | N | 4-$CH(CH_3)_2$ |
| I.19 | N | 2-$CF_3$ |
| I.20 | N | 3-$CF_3$ |
| I.21 | N | 4-$CF_3$ |
| I.22 | N | 2,4-$F_2$ |
| I.23 | N | 2,4-$Cl_2$ |
| I.24 | N | 3,4-$Cl_2$ |
| I.25 | N | 2-Cl, 4-$CH_3$ |
| I.26 | N | 3-Cl, 4-$CH_3$ |
| I.27 | CH | 2-F |
| I.28 | CH | 3-F |
| I.29 | CH | 4-F |
| I.30 | CH | 2-Cl |
| I.31 | CH | 3-Cl |
| I.32 | CH | 4-Cl |
| I.33 | CH | 2-Br |
| I.34 | CH | 3-Br |

Tabelle 1: (fortgesetzt)

| Nr. | T | $R_n$ |
|---|---|---|
| I.35 | CH | 4-Br |
| I.36 | CH | 2-$CH_3$ |
| I.37 | CH | 3-$CH_3$ |
| I.38 | CH | 4-$CH_3$ |
| I.39 | CH | 2-$CH_2CH_3$ |
| I.40 | CH | 3-$CH_2CH_3$ |
| I.41 | CH | 4-$CH_2CH_3$ |
| I.42 | CH | 2-$CH(CH_3)_2$ |
| I.43 | CH | 3-$CH(CH_3)_2$ |
| I.44 | CH | 4-$CH(CH_3)_2$ |
| I.45 | CH | 2-$CF_3$ |
| I.46 | CH | 3-$CF_3$ |
| I.47 | CH | 4-$CF_3$ |
| I.48 | CH | 2,4-$F_2$ |
| I.49 | CH | 2,4-$Cl_2$ |
| I.50 | CH | 3,4-$Cl_2$ |
| I.51 | CH | 2-Cl, 4-$CH_3$ |
| I.52 | CH | 3-Cl, 4-$CH_3$ |

Besonders bevorzugt werden die Verbindungen I.12, I.23, I.32 und I.38.

Die Verbindungen I sind wegen ihres basischen Charakters in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organische Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Unter den Verbindungen der Formel IV sind solche bevorzugt, bei denen $X^1$ eine $C_1$-$C_4$-Halogenalkyl, insbesondere eine Trifluormethylgruppe und $X^2$ und $X^3$ ein Wasserstoffatom oder eine Halogengruppe, insbesondere ein Wasserstoffatom darstellen. $X^4$ und $X^5$ sind bevorzugt Wasserstoff, Halogen (insbesondere Cl oder F), $C_1$-$C_4$-Alkoxy (insbesondere Methoxy oder Ethoxy), $C_1$-$C_4$-Alkylthio (insbesondere Methylthio oder Ethylthio), $C_1$-$C_4$-Halogenalkyl (insbesondere Trifluormethyl) oder $C_1$-$C_4$-Halogenalkoxy (insbesondere Trifluormethoxy).

Als Substituenten $R^1$ werden $C_1$-$C_4$-Alkyl (Methyl, Ethyl, n- und i-Propyl und t-Butyl), $C_1$-$C_4$-Alkylen-$C_3$-$C_7$-Cycloalkyl, $C_1$-$C_4$-Alkenyl (insbesondere Ethenyl, Propenyl und Butenyl, die insbesondere mit Halogen (vorzugsweise Cl) substituiert sein können), Propinyl, Cyanomethyl und Methoxymethyl bevorzugt. Unter den $C_1$-$C_4$-Alkylen-$C_3$-$C_7$-Cycloalkylsubstituenten sind insbesondere methylensubstituierte Verbindungen, insbesondere Methylencyclopropyl, Methylencyclopentyl, Methylencyclohexyl und Methylencyclohexenyl bevorzugt. Die Ringe in diesen Substituenten können vorzugsweise mit Halogen substituiert sein.

Als Substituenten $R^2$ sind neben Phenyl (ggf. substituiert) insbesondere Thienyl, Pyrazolyl, Pyrrolyl, Imidazolyl, Thiazolyl, Furyl, Pyridazinyl und Pyrimidinyl zu nennen. Bevorzugte Substituenten an diesen Ringsystemen sind Halogen (insbesondere F und Cl), $C_1$-$C_4$-Alkoxy (insbesondere Methoxy) und $C_1$-$C_4$-Alkyl (insbesondere Methyl, Ethyl). Die Zahl der Ringsubstituenten kann 1 bis 3, insbesondere 1 bis 2 betragen. Phenyl oder substituiertes Phenyl wird besonders bevorzugt.

Bevorzugte Substituenten $R^3$ und $R^4$ sind Wasserstoff, F, Cl, Methyl, Ethyl, Methoxy, Thiomethyl und N-Methylamino. $R^3$ und $R^4$ können auch zusammen eine Gruppierung =O bilden.

Bevorzugte Verbindungen der Formel IV sind den Tabellen der bereits erwähnten WO 96/019442 zu entnehmen. Von diesen wiederum sind insbesondere die in der nachfolgenden Tabelle II aufgeführten Verbindungen besonders bevorzugt ($R^3$ und $R^4$ sind jeweils Wasserstoff).

Tabelle II:

| Nr. | $X^1$ | $X^2$ | $X^3$ | $X^4$ | $X^5$ | $R^1$ | $R^2$ |
|---|---|---|---|---|---|---|---|
| IV.1 | $CF_3$ | H | H | H | H | Ethyl | Ph-4-OMe |
| IV.2 | $CF_3$ | H | H | H | H | Methyl | Ph-4-OMe |
| IV.3 | $CF_3$ | H | H | H | H | $-CH_2$-cPr | 2-Thienyl |
| IV.4 | $CF_3$ | H | H | H | H | $-CH_2$-cPr | 3-Thienyl |
| IV.5 | $CF_3$ | H | H | H | H | $-CH_2$-cPr | Ph-2,4-$F_2$ |
| IV.6 | $CF_3$ | H | H | H | H | $-CH_2$-cPr | Ph-2-F |
| IV.7 | $CF_3$ | H | H | H | H | $-CH_2$-cPr | Ph-2-F-4-OMe |
| IV.8 | $CF_3$ | H | H | H | H | $-CH_2$-cPr | Ph-3-Me |
| IV.9 | $CF_3$ | H | H | H | H | $-CH_2$-cPr | Ph-3-Me-4-OMe |
| IV.10 | $CF_3$ | H | H | H | H | $-CH_2$-cPr | Ph-4-F |
| IV.11 | $CF_3$ | H | H | H | H | $-CH_2$-cPr | Ph-4-Me |
| IV.12 | $CF_3$ | H | H | H | H | $-CH_2$-cPr | Ph-4-OMe |
| IV.13 | $CF_3$ | H | H | H | H | $-CH_2$-cPr | Ph |
| IV.14 | $CF_3$ | H | H | H | H | $-CH_2-CH=CH_2$ | Ph |
| IV.15 | $CF_3$ | H | H | H | H | $-CH_2-CH=CH_2$ | Ph-4-OMe |
| IV.16 | $CF_3$ | H | H | H | H | $-CH_2-CH=CCl_2$ | Ph-4-OMe |
| IV.17 | $CF_3$ | H | H | H | F | $-CH_2-CH_3$ | Ph-4-OMe |
| IV.18 | $CF_3$ | H | H | H | F | $-CH_2CH_3$ | Ph |
| IV.19 | $CF_3$ | H | H | H | F | $-CH_3$ | Ph-4-OMe |
| IV.20 | $CF_3$ | H | H | H | F | $-CH_2$-cPr | Ph |
| IV.21 | $CF_3$ | H | H | H | F | $-CH_2$-cPr | Ph-2-F |
| IV.22 | $CF_3$ | H | H | H | F | $-CH_2$-cPr | Ph-2,4-$F_2$ |
| IV.23 | $CF_3$ | H | H | H | F | $-CH_2$-cPr | Ph-2-F-3-Me |
| IV.24 | $CF_3$ | H | H | H | F | $-CH_2$-cPr | Ph-2-F-4-OMe |
| IV.25 | $CF_3$ | H | H | H | F | $-CH_2$-cPr | Ph-3,5-$Me_2$ |
| IV.26 | $CF_3$ | H | H | H | F | $-CH_2$-cPr | 3-Methyl-pyrazol-1-yl |
| IV.27 | $CF_3$ | H | H | H | F | $-CH_2$-cPr | 3-Methyl-2-thienyl |
| IV.28 | $CF_3$ | H | H | H | F | $-CH_2$-cPr | 2-Thienyl |
| IV.29 | $CF_3$ | H | H | H | F | $-CH_2$-cPr | 3-Thienyl |

Tabelle II: (fortgesetzt)

| Nr. | $X^1$ | $X^2$ | $X^3$ | $X^4$ | $X^5$ | $R^1$ | $R^2$ |
|---|---|---|---|---|---|---|---|
| IV.30 | $CF_3$ | H | H | H | F | $-CH_2-CHF_2$ | Ph-4-OMe |
| IV.31 | $CF_3$ | H | H | H | F | $-CH_2-OCH_3$ | Ph-4-OMe |
| IV.32 | $CF_3$ | H | H | H | F | $-CH_2-OCH_3$ | Ph |
| IV.33 | $CF_3$ | H | H | H | F | $-CH_2CN$ | Ph-4-Ome |
| IV.34 | $CF_3$ | H | H | H | F | $-CH_2CN$ | Ph |
| IV.35 | $CF_3$ | H | H | H | F | $-CH_2-C\equiv CH$ | Ph |
| IV.36 | $CF_3$ | H | H | H | F | $-CH_2-C\equiv CH$ | Ph-4-OMe |
| IV.37 | $CF_3$ | H | H | H | F | $-CH_2-C\equiv CH$ | Ph-2-F |
| IV.38 | $CF_3$ | H | H | H | F | $-CH_2-C\equiv CH$ | Ph-4-Me |
| IV.39 | $CF_3$ | H | H | H | F | $-CH_2-C\equiv CH$ | 2-Thienyl |
| IV.40 | $CF_3$ | H | H | H | F | $-CH_2-C\equiv CH$ | Ph-2-F-4-OMe |
| IV.41 | $CF_3$ | H | H | H | F | i-Propyl | Ph |
| IV.42 | $CF_3$ | H | H | H | F | n-Butyl | Ph |
| IV.43 | $CF_3$ | H | H | H | F | n-Propyl | Ph |
| IV.44 | $CF_3$ | H | H | H | F | t-Butyl | Ph |
| IV.45 | $CF_3$ | H | H | H | Cl | $-CH_3$ | |
| IV.46 | $CF_3$ | H | H | H | Cl | $-CH_2CN$ | Ph-4-OMe |
| IV.47 | $CF_3$ | H | H | H | Cl | $-CH_2$-OMe | Ph-4-OMe |
| IV.48 | $CF_3$ | H | H | H | Cl | $-CH_2$-cPr | Ph |
| IV.49 | $CF_3$ | H | H | H | Cl | $-CH_2$-cPr | 3-Methyl-pyrazol-1-yl |
| IV.50 | $CF_3$ | H | H | H | Cl | $-CH_2$-cPr | 2-Thienyl |
| IV.51 | $CF_3$ | H | H | H | Cl | $-CH_2$-cPr | Ph-2,4-$F_2$ |
| IV.52 | $CF_3$ | H | H | H | Cl | $-CH_2-C\equiv CH$ | Ph-4-OMe |
| IV.53 | $CF_3$ | H | H | H | $CF_3$ | $-CH_3$ | Ph-4-OMe |
| IV.54 | $CF_3$ | H | H | H | $CF_3$ | $-CH_2CH_2Cl$ | Ph-4-OMe |
| IV.55 | $CF_3$ | H | H | H | $CF_3$ | $-CH_2$-cPr | 2-Thienyl |
| IV.56 | $CF_3$ | H | H | H | $CF_3$ | $-CH_2$-cPr | Ph-2-F-5-Me |
| IV.57 | $CF_3$ | H | H | H | $CF_3$ | $-CH_2$-cPr | Ph-4-OMe |
| IV.58 | $CF_3$ | H | H | H | $CF_3$ | $-CH_2$-cPr | Ph |
| IV.59 | $CF_3$ | H | H | H | $OCH_3$ | $-CH_2CH_3$ | Ph-4-OMe |
| IV.60 | $CF_3$ | H | H | H | $OCH_3$ | $-CH_2$-cPr | Ph-4-OMe |
| IV.61 | $CF_3$ | H | H | H | $OCH_3$ | $-CH_2$-cPr | Ph |
| IV.62 | $CF_3$ | H | H | H | $SCH_3$ | $-CH_2$-cPr | Ph |
| IV.63 | $CF_3$ | H | H | H | $SCH_3$ | $-CH_2$-cPr | Ph-4-Ome |
| IV.64 | $CF_3$ | H | H | Cl | F | $-CH_2-CH_2Cl$ | Ph |
| IV.65 | $CF_3$ | H | H | Cl | F | $-CH_2-CH=CH_2$ | Ph-4-OMe |
| IV.66 | $CF_3$ | H | H | Cl | F | $-CH_2$-cPr | 2-Thienyl |
| IV.67 | $CF_3$ | H | H | Cl | F | $-CH_2$-cPr | Ph-2-F |

Tabelle II: (fortgesetzt)

| Nr. | $X^1$ | $X^2$ | $X^3$ | $X^4$ | $X^5$ | $R^1$ | $R^2$ |
|---|---|---|---|---|---|---|---|
| IV.68 | $CF_3$ | H | H | Cl | F | $-CH_2$-cPr | Ph |
| IV.69 | $CF_3$ | H | H | Cl | F | $-CH_2$-cPr | Ph-2-F-5-Me |
| IV.70 | $CF_3$ | H | H | Cl | Cl | $-CH_2-CH=CH_2$ | Ph-4-OMe |
| IV.71 | $CF_3$ | H | H | Cl | Cl | $-CH_2CH_2Cl$ | Ph |
| IV.72 | $CF_3$ | H | H | Cl | Cl | $-CH_2CH_3$ | Ph-2-F-5-Me |
| IV.73 | $CF_3$ | H | H | Cl | Cl | $-CH_2$-cPr | Ph-3,5-$Me_2$ |
| IV.74 | $CF_3$ | H | H | $SCH_3$ | F | $-CH_2$-cPr | Ph-4-OMe |
| IV.75 | $CF_3$ | H | H | $OCH_3$ | F | $-CH_2$-cPr | Ph-4-OMe |
| IV.76 | $CF_3$ | H | F | H | H | $-CH_2$-cPr | Ph |
| IV.77 | $CF_3$ | H | F | H | H | $-CH_2-CH_3$ | Ph-4-OMe |
| IV.78 | $CF_3$ | H | H | F | F | $-CH_2CH_3$ | Ph |
| IV.79 | $CF_3$ | H | H | F | F | $-CH_2-CH_2Cl$ | Ph-2-F-5-Me |
| IV.80 | $CF_3$ | H | H | F | F | $-CH_2-OCH_3$ | Ph-4-OMe |
| IV.81 | $CF_3$ | H | H | F | F | $-CH_2$-cPr | Ph |
| IV.82 | $CF_3$ | H | H | F | F | $-CH_2$-cPr | 3-Methyl-pyrazol-1-yl |
| IV.83 | $CF_3$ | H | H | F | F | $-CH_2$-cPr | 3-Methyl-2-thienyl |
| IV.84 | $CF_3$ | H | H | F | F | $-CH_2$-cPr | Ph-2-F-3-Me |
| IV.85 | $CF_3$ | H | H | F | F | $-CH_2$-cPr | Ph-2-F-4-OMe |
| IV.86 | $CF_3$ | H | H | F | F | $-CH_2$-cPr | Ph-2-F-5-Me |
| IV.87 | $CF_3$ | H | H | F | F | $-CH_2$-cPr | Ph-4-OMe |
| IV.88 | $CF_3$ | H | H | F | F | $-CH_2$-cPr | Ph-4F |
| IV.89 | $CF_3$ | H | H | F | F | i-Propyl | Ph-4-OMe |
| IV.90 | $CF_3$ | H | H | F | F | n-Butyl | Ph-4-OMe |
| IV.91 | $CF_3$ | H | H | F | F | $-CH_2-C\equiv CH$ | Ph-4-OMe |
| IV.92 | $CF_3$ | H | H | $CF_3$ | F | $-CH_3$ | Ph-4-OMe |
| IV.93 | $CF_3$ | H | H | $CF_3$ | F | $-CH_2-CH=CH_2$ | Ph |
| IV.94 | $CF_3$ | H | H | $CF_3$ | F | $-CH_2$-cPr | Ph |
| IV.95 | $CF_3$ | H | H | Cl | Cl | $-CH_2$-CHxe-3 | Ph |
| IV.96 | $CF_3$ | H | H | F | H | $-CH_2$-cPr | Ph-4-F |
| IV.97 | $CF_3$ | H | H | Cl | Cl | $-CH_2$-cHex | Ph |
| IV.98 | $CF_3$ | H | H | H | F | $-CH_2-SCH_3$ | Ph |
| IV.99 | $CF_3$ | H | H | H | F | $-CH_2-SOCH_3$ | Ph |
| IV.100 | $CF_3$ | H | H | H | F | $-CH_2-SO_2CH_3$ | Ph |
| IV.101 | $CF_3$ | H | H | H | F | $-CH_2$-NHMe | Ph |
| IV.102 | $CF_3$ | H | H | H | F | $CH_2-CONH_2$ | Ph |
| IV.103 | $CF_3$ | H | H | H | F | $CH_2CON(CH_3)_2$ | Ph |

In der vorstehenden Tabelle steht cPr für Cyclopropyl, cHxe-n für in Position n ungesättigtes Cyclohexenyl, c-Hex für Cyclohexyl und Ph für Phenyl.

Besonders bevorzugt werden Verbindungen IV, in denen $R^1$ für einen Rest $CH_2$-cPr und $R^2$ für einen ggf. substituierten Phenylrest steht. Von diesen wiederum bevorzugt sind die Verbindungen, in denen $X^4$ und X5 Halogen, vorzugsweise F, bedeuten.

Die physikalischen Daten dieser Verbindungen sowie Verfahren zu deren Herstellung sind der bereits erwähnten WO 94/19442 zu entnehmen.
Bevorzugt setzt man bei der Bereitstellung der Mischungen die reinen Wirkstoffe I und IV ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und IV bzw. die gleichzeitige gemeinsame oder getrennte Verwendung der Verbindungen I und IV zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Pseudoperonospora-Arten an Kürbisgewächsen und Hopfen, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und IV können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und IV werden üblicherweise in einem Gewichtsverhältnis von 0.01:1 bis 1:1, vorzugsweise 0.03:1 bis 0.5:1, insbesondere 0.05:1 bis 0,5:1 (IV:I) angewandt.

Die Aufwandmengen der erfindungsgemäßen Mischungen liegen je nach Art des gewünschten Effekts für die Verbindungen I bei 0.005 bis 0.5 kg/ha, vorzugsweise 0.05 bis 0.5 kg/ha, insbesondere 0.05 bis 0.2 kg/ha.

Die Aufwandmengen für die Verbindungen IV liegen entsprechend in der Regel bei 0.001 bis 0.2 kg/ha, vorzugsweise 0.001 bis 0.1 kg/ha, insbesondere 0.005 bis 0.05 kg/ha.

Bei der Saatgutbehandlung werden im allgemeinen Aufwandmengen an Mischung von 0,001 bis 100 g/kg Saatgut, vorzugsweise 0,01 bis 50 g/kg, insbesondere 0,01 bis 10 g/kg verwendet.

Sofern für Pflanzen pathogene Schadpilze zu bekämpfen sind, erfolgt die getrennte oder gemeinsame Applikation der Verbindungen oder der Mischungen aus den Verbindungen I und IV durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und IV können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta - und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I und IV oder der Mischung aus den Verbindungen I und IV mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I und/oder IV bzw. der Mischung aus den Verbindungen I und/oder IV. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I und/oder IV bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und IV bei getrennter Ausbringung, behandelt. Die Anwendung kann vor oder nach dem Befall durch die Schadpilze erfolgen.

Die fungizide Wirkung der Verbindung und der Mischungen läßt sich durch folgende Versuche zeigen:

Die Wirkstoffe werden getrennt oder gemeinsam als 10 %ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Anwendungsbeispiel 1 - Wirksamkeit gegen Weizenmehltau

Blätter von in Töpfen gewachsenen Weizenkeimlingen der Sorte "Frühgold" wurden mit wäßriger Wirkstoffaufbereitung, die aus einer Stammlösung, bestehend aus 10 % Wirkstoff, 63 % Cyclohexanon und 27 % Emulgiermittel, angesetzt wurde, bis zur Tropfnässe besprüht und 24 Stunden nach dem Antrocknen des Spritzbelages mit Sporen des Weizenmehltaus (Erysiphe graminis forma specialis tritici) bestäubt. Die Versuchspflanzen wurden anschließend im Gewächshaus bei Temperaturen zwischen 20 und 24°C und 60 bis 90 % relativer Luftfeuchtigkeit aufgestellt. Nach 7 Tagen wurde das Ausmaß der Mehltauentwicklung visuell in % Befall der gesamten Blattfläche ermittelt.

Die Auswertung erfolgt durch Feststellung der befallenen Blattflächen in Prozent. Diese Prozent-Werte werden in Wirkungsgrade umgerechnet. Die zu erwartenden Wirkungsgrade der Wirkstoffmischungen werden nach der Colby Formel [R.S. Colby, Weeds <u>15</u>, 20-22 (1967)] ermittelt und mit den beobachteten Wirkungsgraden verglichen.

Colby Formel:

$$E = x + y + z - x \cdot y \cdot z/100$$

E zu erwartender Wirkungsgrad, ausgedrückt in % der unbehandelten Kontrolle, beim Einsatz der Mischung aus den Wirkstoffen A, B und C in den Konzentrationen a, b und c

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

z der Wirkungsgrad, ausgedrückt in % der unbehandelten Kontrolle, beim Einsatz des Wirkstoffs C in der Konzentration c

Der Wirkungsgrad (**<u>W</u>**) wird nach der Formel von Abbot wie folgt berechnet:

$$W = (1 - \alpha) \bullet 100/\beta$$

α entspricht dem Pilzbefall der behandelten Pflanzen in % und

β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die Ergebnisse der Versuche sind den nachfolgenden Tabellen 2 und 3 zu entnehmen.

Tabelle 2

| Bsp. | Wirkstoff | Wirkstoffkonzentration in der Spritzbrühe in ppm | Wirkungsgrad in % der unbehandelten Kontrolle |
|---|---|---|---|
| 1V | Kontrolle (unbehandelt) | (100 % Befall) | 0 |
| 2V | Verbindung I.32 | 0,5<br>0,125 | 10<br>0 |
| 3V | Verbindung IV.81 | 0,5<br>0,125 | 70<br>70 |

Tabelle 3

| Bsp. | erfindungsgemäße Mischungen | beobachteter Wirkungsgrad | berechneter Wirkungsgrad *) |
|---|---|---|---|
| 4 | 0,5 ppm I.32<br>+<br>0,5 ppm IV.81<br>(Mischung 1:1) | 97 | 73 |
| 5 | 0,125 ppm I.32<br>+<br>0,125 ppm IV.81<br>(Mischung 1:1) | 93 | 70 |

*) berechnet nach der Colby-Formel

Aus den Ergebnissen des Versuches geht hervor, daß der beobachtete Wirkungsgrad in allen Mischungsverhältnissen höher ist als der nach der Colby-Formel vorausberechnete Wirkungsgrad.

## Patentansprüche

1. Fungizide Mischung, enthaltend mindestens eine Verbindung ausgewählt aus

a) Carbamaten der Formel I,

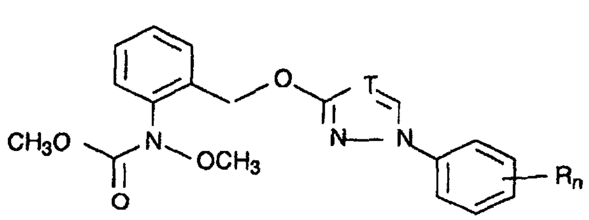

(I)

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht,
und
b) einer Verbindung der Formel IV

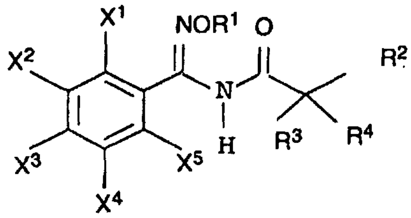

(IV)

wobei die Substituenten $X^1$ bis $X^5$ und $R^1$ bis $R^4$ folgende Bedeutung haben:

$X^1$ bis $X^5$ unabhängig voneinander Wasserstoff, Halogen, $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio, $C_1$-$C_4$-Thioalkoxy, $C_1$-$C_4$-Sulfonylalkyl, Nitro, Amino, N-$C_1$-$C_4$-Carboxylamino, N-$C_1$-$C_4$-Alkylamino;

$R^1$ $C_1$-$C_4$-Alkyl, $C_2$-$C_4$-Alkenyl, $C_2$-$C_4$-Alkinyl, $C_1$-$C_4$-Alkyl-$C_3$-$C_7$-Cycloalkyl, wobei diese Reste Substituenten ausgewählt aus Halogen, Cyano, und $C_1$-$C_4$-Alkoxy tragen können

$R^2$ einen Phenylrest oder einen 5- oder 6-gliedrigen gesättigten oder ungesättigten Heterocyclylrest mit mindestens einem Heteroatom ausgewählt aus der Gruppe N, O und S, wobei die cyclischen Reste einen bis drei Substituenten ausgewählt aus der Gruppe aus Halogen, $C_1$-$C_4$-Alkyl, $C_1$-$C_4$-Alkoxy, $C_1$-$C_4$-Halogenalkyl, $C_1$-$C_4$-Halogenalkoxy, $C_1$-$C_4$-Alkoxy-$C_2$-$C_4$-Alkenyl, $C_1$-$C_4$-Alkoxy-$C_2$-$C_4$-Alkinyl aufweisen können,

$R^3$ und $R^4$ unabhängig voneinander Wasserstoff, Halogen, $C_1$-$C_4$-Alkyl, $C_1$-$C_4$-Alkoxy, $C_1$-$C_4$-Alkylthio, N-$C_1$-$C_4$-Alkylamino, $C_1$-$C_4$-Halogenalkyl oder $C_1$-$C_4$-Halogenalkoxy oder

$R^3$ und $R^4$ bilden zusammen eine Gruppierung =O,

in einer synergistisch wirksamen Menge.

**2.** Fungizide Mischung gemäß Anspruch 1, wobei das Carbamat der Formel I einer der Formeln I.12, I.23, I.32 oder I.38

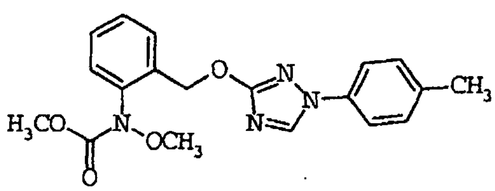

I.12

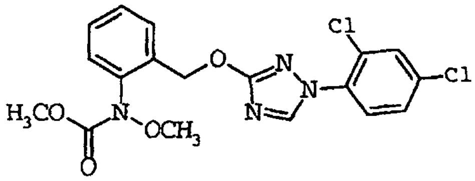

I.23

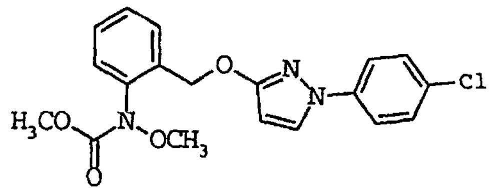

I.32

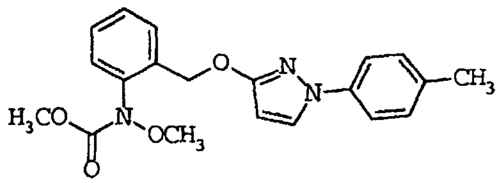

I.38

entspricht.

3. Fungizide Mischung gemäß Ansprüchen 1 oder 2, wobei in Formel IV $X^1$ $C_1$-$C_4$-Halogenalkyl, $X^2$ und $X^3$ Wasserstoff oder Halogen und $X^4$ und $X^5$ Wasserstoff, Halogen, $C_1$-$C_4$-Alkoxy, $C_1$-$C_4$-Alkylthio, $C_1$-$C_4$-Halogenalkyl oder $C_1$-$C_4$-Halogenalkoxy bedeuten.

4. Fungizide Mischung gemäß Ansprüchen 1 oder 2, wobei in Formel IV $R^1$ für Cyclopropylmethylen und $R^2$ für ggf. subst. Phenyl steht.

5. Fungizide Mischung gemäß Anspruch 4, wobei in Formel IV $X^4$ und $X^5$ Halogen bedeuten.

6. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formel I gemäß Anspruch 1 und mindestens einer Verbindung der Formel IV gemäß Anspruch 1 in einer synergistisch wirksamen Menge behandelt.

7. Verfahren nach Anspruch 6, **dadurch gekennzeichnet, daß** man die Schadpilze, deren Lebensraum oder die von ihnen freizuhaltenden Pflanzen, Samen, Böden, Flächen, Materialien oder Räume mit 0,005 bis 0,5 kg/ha mindestens einer Verbindung I gemäß Anspruch 1 behandelt.

8. Verfahren nach Anspruch 6, **dadurch gekennzeichnet, daß** man die Schadpilze, deren Lebensraum oder die von ihnen freizuhaltenden Pflanzen, Samen, Böden, Flächen, Materialien oder Räume mit 0.001 bis 0.2 kg/ha einer Verbindung IV gemäß Anspruch 1 behandelt.

## Claims

1. A fungicidal mixture, comprising at least one compound selected from

a) carbamates of the formula I,

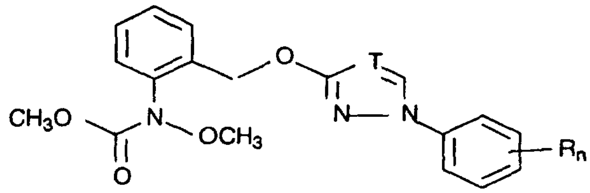

(I)

where T is CH or N, n is 0, 1 or 2 and R is halogen, $C_1$-$C_4$-alkyl or $C_1$-$C_4$-haloalkyl, it being possible for the radicals R to be different if n is 2,
and

b) a compound of the formula IV

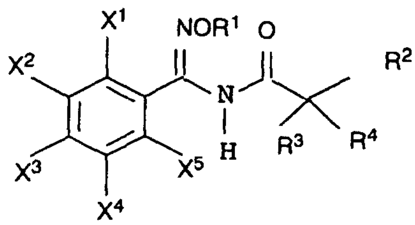

(IV)

where the substituents $X^1$ to $X^5$ and $R^1$ to $R^4$ have the following meanings:

$X^1$ to $X^5$ independently of each other are each hydrogen, halogen, $C_1$-$C_4$-alkyl, $C_1$-$C_4$-haloalkyl, $C_1$-C-$_4$-alkoxy, $C_1$-$C_4$-haloalkoxy, $C_1$-$C_4$-alkylthio, $C_1$-$C_4$-thioalkoxy, $C_1$-$C_4$-sulfonylalkyl, nitro, amino, N-$C_1$-$C_4$-carboxylamino, N-$C_1$-$C_4$-alkylamino;

$R^1$ is $C_1$-$C_4$-alkyl, $C_2$-$C_4$-alkenyl, $C_2$-$C_4$-alkinyl, $C_1$-$C_4$-alkyl-$C_3$-$C_7$-cycloalkyl, it being possible for these radicals to carry substituents selected from the group consisting of halogen, cyano, and $C_1$-$C_4$-alkoxy,

$R^2$ is a phenyl radical or a 5- or 6-membered saturated or unsaturated heterocyclyl radical having at least one hetero atom selected from the group consisting of N, O and S, it being possible for the cyclic radicals to have one to three substituents selected from the group consisting of halogen, $C_1$-$C_4$-alkyl, $C_1$-$C_4$-alkoxy, $C_1$-$C_4$-haloalkyl, $C_1$-$C_4$-haloalkoxy, $C_1$-$C_4$-alkoxy-$C_2$-$C_4$-alkenyl, $C_1$-$C_4$-alkoxy-$C_2$-$C_4$-alkinyl,

$R^3$ and $R^4$ independently of each other are each hydrogen, halogen, $C_1$-$C_4$-alkyl, $C_1$-$C_4$-alkoxy, $C_1$-$C_4$-alkylthio, N-$C_1$-$C_4$-alkylamino, $C_1$-$C_4$-haloalkyl or $C_1$-$C_4$-haloalkoxy or

$R^3$ and $R^4$ together form a grouping =O,

in a synergistically effective amount.

**2.** A fungicidal mixture as claimed in claim 1, where the carbamate of the formula I corresponds to one of the formulae I.12, I.23, I.32 or I.38

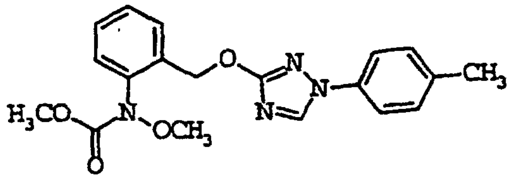

I.12

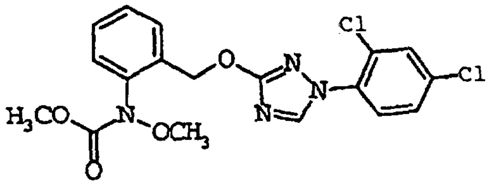

I.23

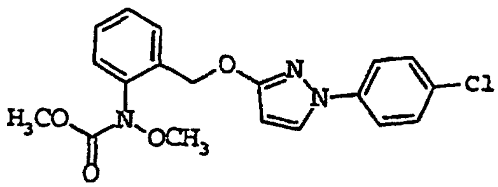

I.32

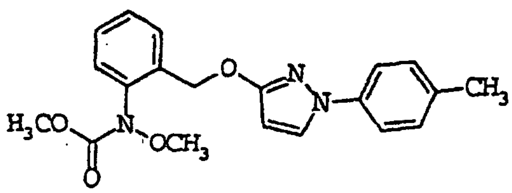

I.38

3. A fungicidal mixture as claimed in claim 1 or 2, where in formula IV $X^1$ is $C_1$-$C_4$-haloalkyl, $X^2$ and $X^3$ are hydrogen or halogen and $X^4$ and $X^5$ are hydrogen, halogen, $C_1$-$C_4$-alkoxy, $C_1$-$C_4$-alkylthio, $C_1$-$C_4$-haloalkyl or $C_1$-$C_4$-haloalkoxy.

4. A fungicidal mixture as claimed in claim 1 or 2, where in formula IV $R^1$ is cyclopropylmethylene and $R^2$ is unsubstituted or substituted phenyl.

5. A fungicidal mixture as claimed in claim 4, where in formula IV $X^4$ and $X^5$ are halogen.

6. A method for controlling harmful fungi, which comprises treating the harmful fungi, their habitat or the plants, seeds, soils, areas, materials or spaces to be kept free from them with a compound of the formula I as set forth in claim 1 and at least one compound of the formula IV as set forth in claim 1 in a synergistically effective amount.

7. A method as claimed in claim 6, wherein the harmful fungi, their habitat or the plants, seeds, soils, areas, materials or spaces to be kept free from them are treated with from 0.005 to 0.5 kg/ha of at least one compound I as set forth in claim 1.

8. A method as claimed in claim 6, wherein the harmful fungi, their habitat or the plants, seeds, soils, areas, materials or spaces to be kept free from them are treated with from 0.001 to 0.2 kg/ha of a compound IV as set forth in claim 1.

**Revendications**

1. Mélange fongicide contenant au moins un composé choisi parmi

a) les carbamates de formule I

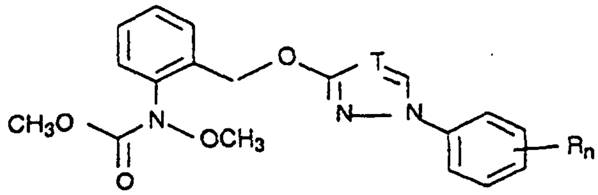

(I)

dans laquelle T représente CH ou N, n est égal à 0 , 1 ou 2 et R représente un halogène un groupe alkyle en C1-C4 ou halogénoalkyle en C1-C4, les divers symboles R pouvant avoir des significations différentes lorsque n est égal à 2,

et

b) un composé de formule IV

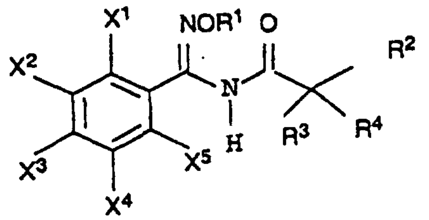

(IV)

dans laquelle les symboles $X^1$ à $X^5$ et $R^1$ à $R^4$ ont les significations suivantes

$X^1$ à $X^5$ représentent chacun, indépendamment les uns des autres, l'hydrogène, un halogène, un groupe alkyle en C1-C4, halogénoalkyle en C1-C4, alcoxy en C1-C4, halogénoalcoxy en C1-C4, alkylthio en C1-C4, thioalcoxy en C1-C4, sulfonylalkyle en C1-C4, nitro, amino, N-(carboxyle en C1-C4)amino, N-alkylamino en C1-C4 ;

$R^1$ représente un groupe alkyle en C1-C4, alcényle en C2-C4, alcynyle en C2-C4, (alkyle en C1-C4) cycloalkyle en C3-C7, ces groupes pouvant porter des substituants choisis parmi les halogènes, les groupes cyano et alcoxy en C1-C4,

$R^2$ représente un groupe phényle ou un groupe hétérocyclyle saturé ou insaturé à cinq ou six chaînons contenant au moins un hétéroatome choisi parmi N, O et S, les groupes cycliques pouvant porter un à trois substituants choisis parmi les halogènes, les groupes alkyle en C1-C4, alcoxy en C1-C4, halogénoalkyle en C1-C4, halogénoalcoxy en C1-C4, (alcoxy en C1-C4)alcényle en C2-C4, (alcoxy en C1-C4) alcynyle en C2-C4,

$R^3$ et $R^4$ représenent chacun, indépendamment l'un de l'autre, l'hydrogène, un halogène, un groupe alkyle en C1-C4, alcoxy en C1-C4, alkylthio en C1-C4, N-alkylamino en C1-C4, halogénoalkyle en C1-C4 ou halogénoalcoxy en C1-C4, ou bien

$R^3$ et R4 forment ensemble un groupement =O, en quantité synergétique efficace.

**2.** Mélange fongicide selon la revendication 1 dans lequel le carbamate de formule I répond à l'une des formules I. 12, I.23, I.32 ou I.38

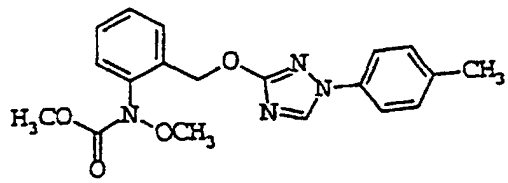

I.12

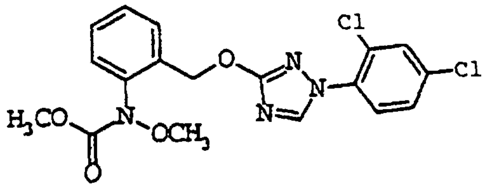

I.23

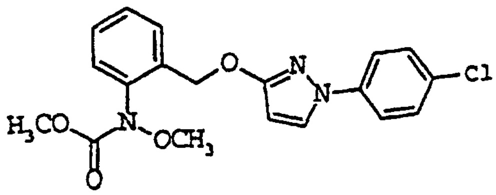

I.32

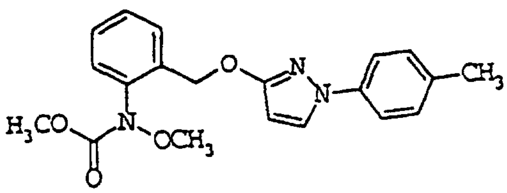

I.38

**3.** Mélange fongicide selon la revendication 1 ou 2 pour lequel, dans la formule IV, $X^1$ représente un groupe halogénoalkyle en C1-C4, $X^2$ et $X^3$ représentent l'hydrogène ou des halogènes et $X^4$ et $X^5$ l'hydrogène, des halogènes, des groupes alcoxy en C1-C4, alkylthio en C1-C4, halogénoalkyle en C1-C4 ou halogénoalcoxy en C1-C4.

**4.** Mélange fongicide selon la revendication 1 ou 2, pour lequel, dans la formule IV, $R^1$ représente un groupe cyclopropylméthylène et $R^2$ un groupe phényle éventuellement substitué.

**5.** Mélange fongicide selon la revendication 4, pour lequel, dans la formule IV, $X^4$ et $X^5$ représentent des halogènes.

**6.** Procédé pour combattre les mycètes nuisibles, **caractérisé par le fait que** l'on traite les mycètes nuisibles, leur habitat ou les végétaux, semences, sols, aires, matériaux ou locaux qu'on veut protéger contre les mycètes par un composé de formule I selon revendication 1 et au moins un composé de formule IV selon la revendication 1 en quantité synergétique efficace.

**7.** Procédé selon la revendication 6, **caractérisé par le fait que** l'on traite les mycètes nuisibles, leur habitat ou les végétaux, semences, sols, aires, matériaux ou locaux qu'on veut protéger contre les mycètes par 0,005 à 0,5 kg/ha d'au moins un composé I selon la revendication 1.

**8.** Procédé selon la revendication 6, **caractérisé par le fait que** l'on traite les mycètes nuisibles, leur habitat ou les végétaux, semences, sols, aires, matériaux ou locaux qu'on veut protéger sont les mycètes par 0,001 à 0,2 kg/ha d'un composé IV selon la revendication 1.